# EUROPÄISCHE PATENTSCHRIFT

(11) **EP 3 741 519 B1**
(45) Veröffentlichungstag und Bekanntmachung des Hinweises auf die Patenterteilung: **02.08.2023**
(21) Anmeldenummer: 20175373.8
(22) Anmeldetag: 19.05.2020
(51) Int. Cl.: B25J 9/16, G05B 19/418, B25J 5/00, B25J 9/00

(54) **SYSTEM UND VERFAHREN ZUM HANDHABEN UND/ODER BEARBEITEN VON WERKSTÜCKEN**
SYSTEM AND METHOD FOR HANDLING AND / OR MACHINING WORKPIECES
SYSTÈME ET PROCÉDÉ DE MANIPULATION ET/OU D'USINAGE DE PIÈCES

(30) Priorität: 21.05.2019 DE 102019113464
(43) Veröffentlichungstag der Anmeldung: 25.11.2020
(73) Patentinhaber: HOMAG GmbH, 72296 Schopfloch (DE)
(72) Erfinder: Wiggeringloh, Stephan, 48231 Warendorf (DE); Gringel, Martin, 72479 Straßberg (DE); Austermeier, Martin, 33397 Rietberg (DE)
(74) Vertreter: Hoffmann Eitle

(56) Entgegenhaltungen:
- EP-A2- 2 631 040
- WO-A2-2010/043640
- DE-A1- 10 335 568
- DE-A1-102016 106 807
- CHEN I-M ED - CHEN F FRANK: "Rapid response manufacturing through a rapidly reconfigurable robotic workcell", ROBOTICS AND COMPUTER INTEGRATED MANUFACTURING, ELSEVIER SCIENCE PUBLISHERS BV., BARKING, GB, Bd. 17, Nr. 3, 1. Juni 2001 (2001-06-01), Seiten 199-213, XP004234140, ISSN: 0736-5845, DOI: 10.1016/S0736-5845(00)00028-4

## Beschreibung

### Technisches Gebiet

Die vorliegende Erfindung bezieht sich auf ein System, umfassend eine zentrale Steuervorrichtung und eine Zelle mit einer mobilen Führungsmaschine, bevorzugt einen Industrieroboter, zum Handhaben und/oder Bearbeiten von Werkstücken, beispielsweise von Möbelteilen, die bevorzugt zumindest abschnittsweise aus Holz, Holzwerkstoffen, Kunststoff oder dergleichen bestehen, und ein Verfahren zum Handhaben und/oder Bearbeiten von solchen Werkstücken.

### Stand der Technik

Generell sind bisher mobile Roboteranwendungen bekannt. Diese sind jedoch meist in der Traglast so eingeschränkt, dass sie zur Handhabung von Möbelteilen uninteressant bzw. unbrauchbar sind, da Diese beispielhaft oftmals bereits zwischen 60 kg und 100 kg (oder mehr) wiegen.

Weitere, bisher bekannte mobile Roboteranwendungen sind ausschließlich zum ständigen Verfahren konstruiert und entsprechend sehr teuer. Dies beruht vor allem darauf, dass aufwändige und großflächige Verfahr- und Positioniersysteme inklusive Umgebungserkennung notwendig sind und somit entsprechende Kosten bei der Konstruktion und Fertigung entstehen. Außerdem sind bereits sogenannte "Quantec" Plattformen bekannt, welche eine hohe Traglast aufweisen. Allerdings ist hierbei der Roboter auf eine autonom verfahrbare großflächige Plattform montiert und kann sich auch während des Verfahrens bewegen. Dies macht wiederum die Plattform ebenfalls sehr kostenintensiv und schränkt zudem die Positionierbarkeit an Maschinen aufgrund der Größe der sich bewegenden Grundform ein. Ein Beispiel hierfür geht aus der WO 2010/043 640 A2 hervor.

Außerdem ist nachteilhaft, dass solche mobilen Roboteranwendungen eine exakte Positionierung der Wägen erfordern was stets den Einsatz eines Experten oder von teuren fahrerlosen Transportsystemen mit entsprechender Sensorik erfordert. Auch eine mobile Plattform, welche für den Betrieb des Industrieroboters fest am Boden befestigt werden muss, ist bereits aus der CN 104 786 236 A bekannt.

Werden solche vollautomatisch beweglichen Plattformen aus Kostengründen, wie beispielsweise in der US 2008/253 871 A1, weggelassen, wirkt sich dies auf die Auslastung eines Industrieroboters, insbesondere bei kleinen und mittelständischen Unternehmen, negativ aus.

Wird ein Industrieroboter zur Beschickung einer Maschine oder beispielsweise in einer Sortierzelle fest am Boden verschraubt, leidet außerdem nicht nur die Auslastung, sondern die Automatisierung ist weniger flexibel einsetzbar und Investitionen sind deutlich risikobehafteter.

Ferner sind beispielsweise aus der DE 10 2010 046 327 A1 sowie der EP 2 631 040 A2 und der DE 10 2012 003 690 A1 mobile Roboteranwendungen auf selbstfahrenden Transportsystemen bekannt, welche Handhabungs- und Bearbeitungsaufgaben ausführen. Diese mobilen Plattformen können sich von der jeweiligen Bearbeitungsposition bewegen und neu positionieren und ausrichten. Jedoch fehlt es diesen bisherigen Anwendungen an einer Möglichkeit, sich flexibel zu kombinieren bzw. zu konfigurieren und entsprechend mit weiteren Zusatzvorrichtungen zu verbinden, um somit eine passende und effektive Bearbeitung zu ermöglichen. Auch ein Erweitern bzw. Ersetzen von einzelnen Bearbeitungsstationen in einer solchen beispielhaften Bearbeitungszelle kann bisher nicht erzielt werden.

Ferner sind solche bisher bekannten selbstfahrenden Transportsysteme mit Robotern nur auf sehr leichte und kleine Werkstücke ausgelegt und können entsprechend nicht zur Bearbeitung von Möbelteilen oder dergleichen verwendet werden. Ein Beispiel für eine mobile Führungsmaschine mit einer mechanischen Schnittstelle zur Ausrichtung mit einer oder mehreren Arbeitsstationen geht aus der DE 10 2016 106807 A1 hervor, welche die Grundlage für die zweiteilige Fassung des unabhänggigen Anspruchs 1 bildet.

### Darstellung der Erfindung

Es ist daher Aufgabe der vorliegenden Erfindung, ein System umfassend eine zentrale Steuereinrichtung und eine Zelle und ein Verfahren zum Handhaben und/oder Bearbeiten von Werkstücken mit einer Führungsmaschine vorzusehen, welche eine rekonfigurierbar und modular ausgestaltete, autonomisierte Fertigung bzw. Werkstückhandhabung ermöglichen.

Mit anderen Worten, der Erfindung liegt der Gedanke zu Grunde eine Bearbeitungs- bzw. Materialhandhabungszelle modular und rekonfigurierbar zu gestalten, in welcher autonom bestimmte Funktionen und Fähigkeiten individuell für den jeweiligen Arbeitsschritt ausgestaltbar sind.

Ferner soll eine solche rasche und individuelle, modulare Rekonfigurierung einer Bearbeitungs- und/oder Handhabungszelle mit einer mobilen Führungsmaschine ermöglicht werden. Somit kann ein Roboter beispielsweise selbstständig oder an einer externen, stationären Bearbeitungsvorrichtung schnell versetzt und wieder eingesetzt werden, um die Kosten für eine solche mobile Führungsmaschine, bevorzugt einen Industrieroboter, stark zu reduzieren, feste Installationen am Boden bei einer gleichzeitig hohen Traglast zu vermeiden, und die Flexibilität und Auslastung insbesondere bei der Handhabung und/oder Bearbeitung von Werkstücken zu verbessern.

Diese Aufgabe wird durch ein System gemäß Anspruch 1 und/oder ein Verfahren gemäß Anspruch 10 gelöst. Bevorzugte Ausgestaltungen finden sich in den weiteren Ansprüchen.

Gemäß einer Ausführungsform weist eine mobile Führungsmaschine, bevorzugt ein Industrieroboter, zum Handhaben und/oder Bearbeiten von Werkstücken, beispielsweise von Möbelteilen, die bevorzugt zumindest abschnittsweise aus Holz, Holzwerkstoffen, Kunststoff oder dergleichen bestehen, mindestens einen Betätigungsarm, welcher sich in mindestens zwei Achsen, bevorzugt mindestens drei Achsen, besonders bevorzugt sechs Achsen, bewegbar von einer Basis der mobilen Führungsmaschine erstreckt, und mindestens eine Schnittstelle, welche an der Basis der mobilen Führungsmaschine angeordnet ist, auf.

Hierbei ist die mobile Führungsmaschine so ausgestaltet, dass sie verankerungsfrei auf einem Untergrund auf- bzw. abbaubar ist und, bevorzugt autonom, bewegbar ist, und wobei die mindestens eine Schnittstelle so ausgestaltet ist, dass sie eine Verbindung, und eine Referenzierung und/oder Ausrichtung, und einen Datenaustausch mit einer Zusatzvorrichtung ermöglicht.

Wie oben beschrieben kann unter dem Begriff der mobilen Führungsmaschine ein Industrieroboter bevorzugt verstanden werden, beispielsweise ein 6-Achs-Industrieroboter. Es sind jedoch auch Flächen- oder Linienportale darunter verstehbar.

Unter dem "Betätigungsarm" ist hierbei der mindestens eine Ausleger eines Industrieroboters zu verstehen, welcher mittels einer Steuerung gesteuert werden kann, um bestimmte Aufgaben bzw. Bewegungen auszuführen.

Die "Basis" der mobilen Führungsmaschine stellt hierbei das Fundament der mobilen Führungsmaschine dar, von welcher sich der mindestens eine Betätigungsarm erstreckt.

Gemäß einer solchen Ausgestaltungsform ist es möglich, dass die mobile Führungsmaschine im einstelligen Minutenbereich versetzt und wieder in Betrieb nehmbar ist, was die Wirtschaftlichkeit und die Flexibilität einer solchen Anordnung ermöglicht.

Außerdem ist dadurch eine Investition weniger risikobehaftet. Ferner ist dadurch eine Festinstallation am Boden überflüssig und ein einmaliges (oder mehrfaches) Versetzen ist schnell und einfach in einem deutlich niedrigeren Kostenrahmen als bei dauerhaft und fest angeordneten Roboterplattformen möglich. Ferner ist dadurch eine schnelle und einfache Verwendung der mobilen Führungsmaschine an mehreren stationären Maschinen möglich.

Hierbei findet die Verbindung zwischen der mobilen Führungsmaschine und einer Zusatzvorrichtung, welche nachfolgend genauer beschrieben wird, mittels der mindestens einen Schnittstelle statt. Es können jedoch auch mehrere gleichartige Schnittstellen an der Basis der mobilen Führungsmaschine vorgesehen sei.

Wie oben bereits beschrieben, ermöglicht eine solche Schnittstelle einerseits eine statische Verbindung von der mobilen Führungsmaschine zu einer Zusatzvorrichtung und ermöglicht außerdem eine präzise, einfache und schnelle Ausrichtung und/oder Referenzierung der mobilen Führungsmaschine zu mindestens einer oder mehreren, weiteren Zusatzvorrichtung.

Auch eine Verwendung von mehreren Zusatzvorrichtungen mittels mehrerer an der mobilen Führungsmaschine angeordneter Schnittstellen ist denkbar. Das heißt, an der mobilen Führungsmaschine können mittels der Schnittstellen an der Basis der mobilen Führungsmaschine auch mehrere Zusatzvorrichtungen verbunden sein. Auch hierbei werden die mehreren Zusatzvorrichtungen über die jeweils separate Verbindung an einer Schnittstelle der mobilen Führungsmaschine ausgerichtet, referenziert und es kann ein Datenaustausch zwischen der Zusatzvorrichtung und der mobilen Führungsmaschine stattfinden.

Auch eine Verbindung von mehreren Zusatzvorrichtungen miteinander ist denkbar, welche bevorzugt über eine Schnittstelle einer der Vielzahl von miteinander verbundenen Zusatzvorrichtungen an eine mobile Führungsmaschine koppelbar sind, um so als "eine Einheit" referenziert, ausgerichtet und verbunden zu werden und um Daten an die mobile Führungsmaschine zu übertragen.

Der Erfindung liegt also außerdem der Gedanke zu Grunde eine modulare, rekonfigurierbare, flexible und schnelle Verwendung einer Zelle mit einer mobilen Führungsmaschine zum Handhaben und/oder Bearbeiten von Werkstücken, beispielsweise Möbelteilen, an verschiedenen Orten zu realisieren. Auch eine Handhabung und/oder Bearbeitung von Werkstücken mit einer Zelle mit einer mobilen Führungsmaschine, welche sich selbständig beliebig ausgestaltet, ist ebenfalls denkbar.

Das heißt, in einer solchen Ausführungsform kann die Basis der mobilen Führungsmaschine so verstanden werden, dass an ihr weitere Systemkomponenten (Zusatzvorrichtungen) mittels der Schnittstelle angebaut und orientiert werden können und auch bei Bedarf wieder abgekoppelt und anders angeordnet werden können. Hierbei bewerkstelligt die Basis der mobilen Führungsmaschine die verankerungsfreie Aufnahme der Prozesskräfte des Industrieroboters und die Standsicherheit des Systems durch Haftreibung mit dem Untergrund.

In Bezug dazu ermöglicht die Schnittstelle der mobilen Führungsmaschine, welche immer einen Bezug zu den Arbeitsfeldern/Arbeitsräumen an ihrem Einsatzort bzw. an einer verbundenen stationären Maschine benötigt, dass in kürzester Zeit und mit geringem Aufwand am jeweiligen Einsatzort die mobile Führungsmaschine zum Einsatz gebracht werden kann.

Vor diesem Hintergrund zeichnet sich die mobile Führungsmaschine dadurch aus, dass keine ortsfeste Aufstellung erfolgt und ebenfalls keine aufwändigen Fundamentierungsvorgaben zu erfüllen sind, sondern ein einfaches Abstellen und Einstecken der Energie und Medienversorgung ausreichend ist, eine solche mobile Führungsmaschine in Betrieb zu nehmen.

Besonders bevorzugt ist hierbei eine autonom fahrende mobile Führungsmaschine, welche selbstständig zu einem Einsatzort "fährt" und dort mittels der Schnittstelle mit weiteren Zusatzvorrichtungen verbindbar ist.

Unter den Zusatzvorrichtungen, welche mittels der Schnittstelle an der mobilen Führungsmaschine verbunden werden können, um so eine Referenzierung/Ausrichtung sowie eine Datenübertragung zu ermöglichen, können beispielsweise eine Bearbeitungsmaschine, ein Arbeitsplatz, ein Stapelplatz für mindestens ein Werkstück, ein Werkzeug, ein Aggregat, ein Aggregatsmagazin, oder mindestens eine Greifvorrichtung, ein Greifvorrichtungsmagazin, ein Aufspanntisch für ein Werkstück, und/oder ein Lagerplatz für Verbrauchsmaterialien, beispielsweise Kanten, Leim und/oder Beschläge, und/oder eine Sicherheitsvorrichtung verstanden werden.

Bevorzugt ist, dass die mobile Führungsmaschine ferner einen Endeffektor aufweist, welcher mittels einer weiteren Schnittstelle am distalen Ende des Betätigungsarms angeordnet ist, und welcher an verschiedenen Funktionen anpassbar ist.

Gemäß einer solchen Ausgestaltung ist es möglich, dass die mobile Führungsmaschine variabel dazu verwendet werden kann, verschiedene Aufgaben zu erfüllen.

Hierbei kann der Endeffektor bevorzugt so ausgestaltet sein, Funktionen der spannenden Bearbeitung, der Kantennachbearbeitung, und/oder der Montage durch eine Verbindung mit verschiedenen Werkzeugen an der weiteren Schnittstelle am Endeffektor auszuführen.

Ferner kann der Endeffektor ausgestaltet sein eine Funktion der Oberflächengestaltung und/oder des 2D- bzw. 3D Printings auszuführen.

Mit anderen Worten, der Endeffektor ist mittels der weiteren Schnittstelle am distalen Ende des Betätigungsarms mit der mobilen Führungsmaschine verbunden und kann durch verschiedene Werkzeugwechsel verschiedene Aufgaben ausführen. Das heißt, die mobile Führungsmaschine kann mittels des Endeffektors zum Beispiel spanende Bearbeitungen wie Bohren, Fräsen, Sägen, Kantenbearbeitungen mittels Kantenauftrag und Kantennachbearbeitung, Montagearbeiten, wie zum Beispiel Beschlag setzen, Korpusmontage und viele weitere Bearbeitungstätigkeiten an einem Werkstück, beispielsweise einem Möbelteil ausführen.

Auch ein Werkzeugwechsel ist mittels der weiteren Schnittstelle zum Endeffektor der mobilen Führungsmaschine möglich. Beispielhaft wird hierbei auf die Einwechslung einer Frässpindel zur spanenden Bearbeitung beschrieben, welches über einen mit der mobilen Führungsmaschine als Zusatzvorrichtung verbundenen Arbeitsplatz aufgenommen werden kann. Selbstverständlich können auch mehrere unterschiedliche Aggregate am Endeffektor aufgebaut sein. Wenn ein Bearbeitungsschritt beendet ist, kann beispielsweise der Endeffektor an der weiteren Schnittstelle des Betätigungsarms gewechselt werden, und beispielsweise eine Greifeinheit oder dergleichen aufgenommen werden, um die bearbeiteten Werkstücke von der mobilen Führungsmaschine bzw. von einer verbundenen Zusatzvorrichtung zu entfernen. Hierbei können die entsprechenden Endeffektoren auf der mobilen Führungsmaschine mitfahren oder ortsfest gelagert werden und von der mobilen Führungsmaschine "abgeholt werden", falls diese benötigt werden.

Bevorzugt weist die mobile Führungsmaschine ferner mindestens einen Sicherheitssensor, bevorzugt einen visuellen Sicherheitssensor auf.

Somit ist eine sichere Verwendung der mobilen Führungsmaschine möglich, ohne dass hierbei Menschen oder Gegenstände zu Schaden kommen. Außerdem kann dadurch der Arbeitsbereich der mobilen Führungsmaschine mittels der Sicherheitssensorik überwacht werden. Dies ermöglicht, dass das Anbringen von Sicherheitszäunen oder vergleichbaren Sicherheitsvorrichtungen vermieden oder reduziert werden kann, was wiederum die Inbetriebnahme und ein schnelles und sicheres Versetzen der mobilen Führungsmaschine und gegebenenfalls verbundener Zusatzvorrichtungen ermöglicht.

Außerdem kann dementsprechend ein Kollaborationsbetrieb zwischen Mensch und mobiler Führungsmaschine und gegebenenfalls zusätzlich angeschlossener Zusatzvorrichtungen ermöglicht werden.

Gemäß einer erfindungsgemäßen Ausführungsform weist eine Zelle zum Handhaben und/oder Bearbeiten von Werkstücken, beispielsweise von Möbelteilen, die bevorzugt zumindest abschnittsweise aus Holz, Holzwerkstoffen, Kunststoff oder dergleichen bestehen, mindestens eine mobile Führungsmaschine gemäß einem der bisherigen Aspekte und mindestens eine Zusatzvorrichtung auf, welche mittels der mindestens einen Schnittstelle der mobilen Führungsmaschine zum Konfigurieren der Ausgestaltung der Zelle gekoppelt ist. Hierbei ist die Schnittstelle ausgestaltet, eine Referenzierung und/oder Ausrichtung der Zusatzvorrichtung zur mobilen Führungsmaschine mechanisch und virtuell zu ermöglichen.

Die Zelle ist ferner an einer zentralen Steuervorrichtung angeordnet ist, welche ausgestaltet ist, Zustände der mobilen Führungsmaschine und der mindestens einen Zusatzvorrichtung zu erfassen, und ferner ausgestaltet ist, Prozessabläufe mittels der in der Zelle erfassten Zustände zu optimieren.

Gemäß einer solchen Ausgestaltung ist es möglich, dass die Abläufe in der Zelle oder von einer externen Gesamtsteuerung zentral optimiert und überwacht werden und somit die ausreichenden Parameter zu einer vollständigen autonomen Fertigung gesammelt werden.

Das heißt, das System kann über einen Algorithmus in der zentralen Steuervorrichtung verfügen, welcher anhand von den Zuständen der mobilen Führungsmaschine und/oder der mindestens einen Zusatzvorrichtung, sowie deren Änderung, Regeln in Form eines prozessualen oder deklarierten Wissens der Umgebungsparameter, zum Beispiel der "Verkehrslage", erzeugen kann und das Gesamtsystem der Handhabungs-/Bearbeitungszelle selbst optimieren kann.

Bevorzugt ist hierbei, dass der Algorithmus selbstlernend und sich selbst permanent optimierend ist, sodass eine möglichst optimierte Bearbeitung, Sortierung und Handhabung der Werkstücke erzielt werden kann.

Ferner kann dadurch erreicht werden, dass sich das System anforderungs- bzw. bedarfsgerecht selbst optimal konfigurieren bzw. rekonfigurieren und zum Einsatzort gelangen kann.

Ferner ist es mittels einer solchen zentralen Steuervorrichtung möglich, bisher nicht mittels der Schnittstelle der mobilen Führungsmaschine angedockte Zusatzvorrichtungen zu "ordern" und somit eine neue Konfigurierung der Zelle optimal zu gestalten. Das heißt, es entsteht ein intelligenter Verbund aus mobilen Führungsmaschinen, Zusatzvorrichtungen und, bevorzugt mindestens einer stationären Bearbeitungsmaschine, welcher als Ganzes selbst und ohne händischen Input von Infos optimierbar ist.

Ferner ist es möglich, dass, wenn ein Aufspanntisch für Werkstücke in die Konfigurierung der Zelle zum Handhaben und/oder Bearbeiten von Werkstücken als Zusatzvorrichtung an der Schnittstelle der mindestens einen mobilen Führungsmaschine angedockt wird, dass eine eigene mobile Bearbeitungsmaschinenzelle erzeugt werden kann, welche herkömmliche Bearbeitungsmaschinen erweitern bzw. sogar ersetzen kann.

Unter einer "virtuellen" Schnittstelle ist hierbei eine Ausrichtung, beispielsweise mittels GPS Positionsdaten, einer Radarpositionierung, oder mittels optischen Markierungen denkbar.

Bevorzugt ist der Datenaustausch der mobilen Führungsmaschine mit der Zusatzvorrichtung mittels der Schnittstelle so ausgestaltet, dass die Zusatzvorrichtung mittels einer Steuerung der mobilen Führungsmaschine erfasst und zentral von der mobilen Führungsmaschine gesteuert werden kann.

Somit ist es möglich, eine Datenschnittstelle zu einer zentralen/übergeordneten Maschinensteuerung bzw. zu einem übergeordneten Leitrechner zu ermöglichen, sodass alle benötigten Informationen an einer zentralen Steuerungsvorrichtung zusammenlaufen, um somit eine Handhabung und/oder Bearbeitung von Werkstücken mit der mobilen Führungsmaschine zu ermöglichen.

Mit anderen Worten, die Zusatzvorrichtungen können selbstständig und zentral gesteuert werden, und nach der Kopplung mit der mobilen Führungsmaschine mittels ihrer Schnittstelle die Führung und Steuerung zentral, beispielsweise an die mobile Führungsmaschine oder einen externen Leitrechner abgeben.

Auch eine Steuerung der mobilen Führungsmaschine durch die Steuerung in der Zusatzvorrichtung ist ebenfalls denkbar. Außerdem ist es möglich, dass die Zusatzvorrichtung der mobilen Führungsmaschine bestimmte Begrenzungen, Referenzierungswerte oder dergleichen vorgibt, um so Beschädigungen an der Zusatzvorrichtung oder dergleichen zu ermöglichen. Somit ist es der mobilen Führungsmaschine ferner möglich, ohne weitere, aufwendige Programmierung, mit verschiedenen Endeffektoren, welche beispielsweise von einer Zusatzvorrichtung aufgenommen werden, zu kommunizieren bzw. zu arbeiten. Dadurch wird ein schneller, einfacher und unkomplizierter Werkzeugwechsel am Endeffektor der mobilen Führungsmaschine bzw. die Kopplung mit verschiedensten Zusatzvorrichtungen an der Schnittstelle der mobilen Führungsmaschine sichergestellt.

Bevorzugt ist ferner, dass die mobile Führungsmaschine und die mindestens eine Zusatzvorrichtung mittels der Kopplung an der Schnittstelle der mobilen Führungsmaschine, bevorzugt autonom, gemeinsam zu verschiedenen Positionen, beispielsweise Bearbeitungs- oder Wartepositionen, bewegbar sind.

Alternativ ist bevorzugt, dass die mobile Führungsmaschine und die mindestens eine Zusatzvorrichtung getrennt voneinander, bevorzugt autonom, zu verschiedenen Positionen, beispielsweise Bearbeitungs- oder Wartepositionen, bewegbar sind und ausgestaltet sind, sich mittels der Schnittstelle an der mobilen Führungsmaschine autonom wieder miteinander zu koppeln.

Gemäß einer solchen Ausgestaltung ist es möglich, dass die Zusatzvorrichtungen, zum Beispiel Arbeitsplätze, über diese Schnittstelle "Bestandteil" der mobilen Führungsmaschine werden können und dadurch zumindest kurzfristig ebenfalls mobil und beispielsweise als eine Einheit an der mobilen Führungsmaschine, oder an einer weiteren Zusatzvorrichtung, zum Beispiel einem Werktisch oder einer Bearbeitungsvorrichtung, zum Einsatz kommen. Ferner ist es dadurch möglich, dass kostengünstigere Zusatzvorrichtungen, ohne selbst fahrende bzw. motorisierte Verfahrvorrichtungen auskommen, erzeugt werden können.

Durch die Ausgestaltung der getrennt voneinander bewegbaren Zusatzvorrichtung und der mobilen Führungsmaschine ist es ferner möglich, dass vollkommen autonom und ohne Eingriff eines Bedieners, eine Rekonfigurierung und Neuanordnung bzw. Förderung bestimmter, zum Beispiel unbenutzter, Zusatzvorrichtungen möglich ist. Das heißt, nach Ausführung von bestimmten Arbeitsschritten kann sich die Zelle neu konfigurieren und mittels der Schnittstelle an der mobilen Führungsmaschine automatisch eine Neukonfigurierung der Zelle zum Handhaben und/oder Bearbeiten von Werkstücken stattfinden.

Das heißt, die Schnittstellen ermöglichen die Konfiguration/Rekonfiguration der jeweils benötigten Arbeitsplätze (der Zusatzvorrichtungen) an der mobilen Führungsmaschine. Außerdem sind die Arbeitsplätze (Zusatzvorrichtungen) selbst ebenfalls mobil bzw. sogar bevorzugt autonom fahrbar und können sich über die Schnittstellen automatisch an der Führungsmaschine andocken, ausrichten und referenzieren bzw. notwendige Daten an die mobile Führungsmaschine übertragen. Zudem können sie auch notwendige Informationen von der mobilen Führungsmaschine erhalten. Das heißt, eine Kommunikation in zwei Richtungen ist mittels der Schnittstelle möglich.

Bevorzugt ist ferner, dass die Zelle eine stationäre Bearbeitungsmaschine, bevorzugt eine CNC Bearbeitungsmaschine aufweist, welche mittels eines festen Ausrichtungs- und Referenzierungsanschlusses mit einer ersten Schnittstelle der mobilen Führungsmaschine gekoppelt ist, an der mindestens eine Zusatzvorrichtung mittels einer zweiten Schnittstelle der mobilen Führungsmaschine gekoppelt ist.

Gemäß einer solchen Ausgestaltung ist es möglich, dass eine Kombination aus mobiler Führungsmaschine und mindestens einer Zusatzvorrichtung an einer stationären Bearbeitungsmaschine, welche komplexe Arbeitsschritte ausführen kann, an- bzw. abgekoppelt werden kann und somit Bearbeitungsschritte an dieser stationären Bearbeitungsmaschine ausgeführt werden können.

Sollte die mobile Führungsmaschine und/oder die mindestens eine Zusatzvorrichtung nicht weiter an der Bearbeitungsmaschine benötigt werden, ist ein Abkoppeln von der Schnittstelle der mobilen Führungsmaschine bzw. von der mobilen Führungsmaschine von dem Ausrichtungs- und Referenzierungsanschluss der Bearbeitungsmaschine denkbar. Im Anschluss kann die mobile Führungsmaschine getrennt voneinander oder gemeinsam mit der Zusatzvorrichtung zu einer neuen Bearbeitungs-/Warteposition fahren.

Somit kann beispielsweise ein automatisiertes Beladen sowie das automatisierte Entnehmen von Werkstücken aus einer Bearbeitungsmaschine ohne Eingriff eines Bedieners ermöglicht werden. Auch ein Sortiereffekt ist hierbei möglich.

Beispielsweise können zudem mehrere Zusatzvorrichtungen an der mobilen Führungsmaschine angeordnet sein, welche mittels des Ausrichtungs- und Referenzierungsanschlusses an der Bearbeitungsmaschine verbunden ist, sodass ein Sortieren und ein Werkzeugwechsel ohne Eingriff des Bedieners vollautomatisch im konfigurierten modularen Zellaufbau ermöglicht werden kann.

Im oben beschriebenen Beispiel des automatisierten Beladens und Entnehmens von Werkstücken aus einer CNC Bearbeitungsmaschine weist der Endeffektor eine Greifereinheit auf, wobei das Beladen von einem Arbeitsplatz (einer Zusatzvorrichtung), zum Beispiel in Form einer Palette, erfolgt, welcher über ihre Schnittstelle zur Führungsmaschine eindeutig referenziert wird. Anschließend wird das Werkstück in die Bearbeitungsmaschine mittels der mobilen Führungsmaschine gegeben. Nach der dortigen Bearbeitung wird das fertig bearbeitete Werkstück aus der Bearbeitungsmaschine entnommen und einer weiteren Zusatzvorrichtung, einem weiteren Arbeitsplatz, beispielsweise in Form eines "Fertigteilstapels" zugeführt und in einer definierten Ablageposition abgelegt (zum Beispiel in einem Hordenwagen).

Hierbei kann bevorzugt die übergeordnete Steuerung der Bearbeitungsmaschine oder der mobilen Führungsmaschine oder ein übergeordneter, zentraler Leitrechnen den optimalen Gesamtablauf bzw. den Kollateralbetrieb zwischen mobiler Führungsmaschine und Bearbeitungsmaschine steuern.

Ähnlich zur oben beschriebenen Schnittstelle kann der Ausrichtungs- und Referenzierungsanschluss so ausgestaltet sein, dass er eine Verbindung und eine Referenzierung und/oder Ausrichtung und einen Datenaustausch mit der mobilen Führungsmaschine ermöglicht.

Bevorzugt ist, dass die mobile Führungsmaschine und/oder die mindestens eine Zusatzvorrichtung mit einem Flurförderfahrzeug oder einem fahrerlosen Transportsystem verbindbar sind.

Bevorzugt ist ferner, dass mehrere mobile Führungsmaschinen miteinander kombinierbar sind, um somit die Flexibilität der Zellen zum Handhaben und/oder Bearbeiten von Werkstücken zu erhöhen.

Gemäß einem weiteren Aspekt weist ein Verfahren zum Handhaben und/oder Bearbeiten von Werkstücken, beispielsweise von Möbelteilen, die bevorzugt zumindest abschnittsweise aus Holz, Holzwerkstoffen, Kunststoff oder dergleichen bestehen, die folgenden Schritte auf: Vorsehen einer Zelle gemäß einem der bisherigen Aspekte; Anliefern, bevorzugt autonomes Anliefern, einer Zusatzvorrichtung an eine mobile Führungsmaschine, Ankoppeln der Zusatzvorrichtung an die mobile Führungsmaschine mittels einer Schnittstelle der mobilen Führungsmaschine, Erkennen der angekoppelten Zusatzvorrichtung, Ausführen einer Handhabungs- und/oder Bearbeitungsfunktion durch die mobile Führungsmaschine, Abkoppeln der Zusatzvorrichtung von der Schnittstelle der mobilen Führungsmaschine, und Abtransportieren, bevorzugt autonomes Abtransportieren, der Zusatzvorrichtung.

Bevorzugt weist das Verfahren ferner den Schritt des Koppelns der mobilen Führungsmaschine mit einer daran angekoppelten Zusatzvorrichtung an eine stationäre Bearbeitungsvorrichtung, bevorzugt eine stationäre CNC Bearbeitungsvorrichtung, auf.

Dadurch entsteht eine Zelle, die sich in kurzer Zeit aufstellen oder versetzen oder individuell modular konfigurieren und rekonfigurieren lässt.

Dies ermöglicht eine sehr hohe Wandlungsfähigkeit und Skalierbarkeit der Automation und ermöglicht ferner eine höchst abwechslungsreiche Anwendung der mobilen Führungsmaschine mit Zusatzvorrichtungen und/oder einer stationären Bearbeitungsmaschine.

### Kurze Beschreibung der Zeichnungen

Nachfolgend wird anhand schematischer Zeichnungen eine mobile Führungsmaschine, eine Zelle und ein Verfahren zum Handhaben und/oder Bearbeiten von Werkstücken dargestellt und beschrieben. Es zeigt:

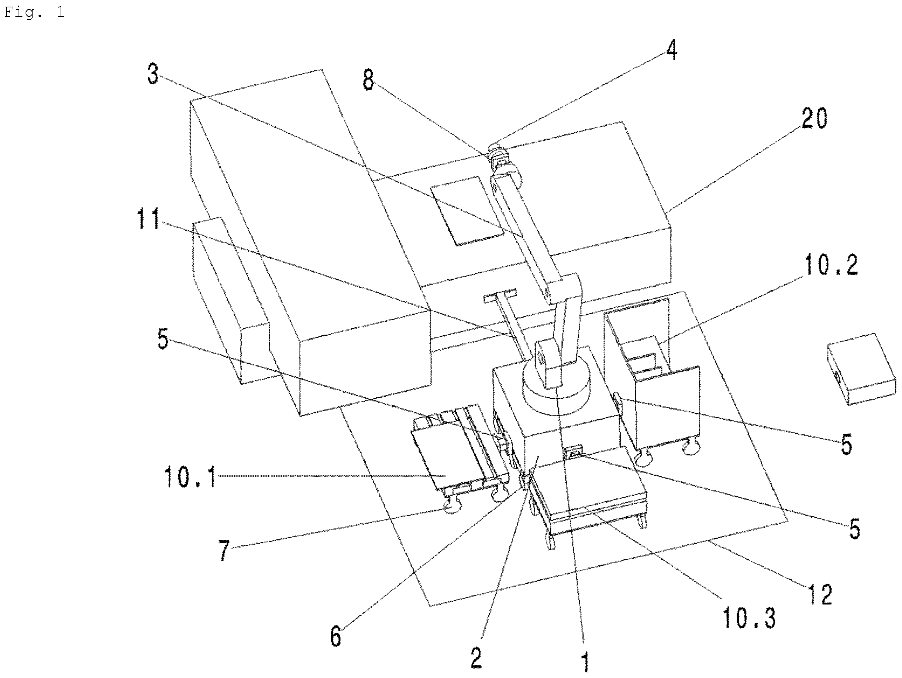

Figur 1: eine isometrische Darstellung einer Zelle zum Handhaben und/oder Bearbeiten von Werkstücken mit einer mobilen Führungsmaschine und mehreren gekoppelten Zusatzvorrichtungen.

### Beschreibung der bevorzugten Ausführungsform

Aus Figur 1 geht eine mobile Führungsmaschine 1 in einer Zelle zum Handhaben und/oder Bearbeiten von Werkstücken hervor. In der gezeigten beispielhaften Ausführungsform sind diese Werkstücke Möbelteile, welche aus Holz bestehen.

Zudem ist die mobile Führungsmaschine 1 hier als 6-Achs-Industrieroboter dargestellt. Der Roboter 1 weist hierbei eine Basis 2 auf, von welcher sich ein Betätigungsarm 3 des Industrieroboters 1 erstreckt. Am distalen, also am von der Basis entfernten, Ende des Industrieroboters 1, ist ein Endeffektor 4 angeordnet, sodass verschiedene Werkzeuge am Industrieroboter 1 mittels einer weiteren Schnittstelle am Betätigungsarm angebracht werden können. Ferner verfügt der Industrieroboter 1 über eine (nicht gezeigte) Steuerungsvorrichtung, welche die Kinematik des Bewegungsarms 3 des Industrieroboters 1 steuert.

Außerdem geht aus der in Figur 1 gezeigten beispielhaften Ausführungsform hervor, dass die Basis 2 über mehrere Schnittstellen 5 verfügt. Diese Schnittstellen sind in der gezeigten beispielhaften Ausführungsform von Figur 1 an den Seitenflächen der Basis 2 des Industrieroboters angeordnet, wobei die Basis 2 selbst als quaderförmiger Grundkörper beispielhaft ausgestaltet ist, welcher sich in der gezeigten beispielhaften Ausführungsform auf einem fahrerlosen Transportsystem (FTS) 6 befindet.

Mittels des fahrerlosen Transportsystems 6 ist es möglich, dass der Industrieroboter 1 innerhalb einer Werkhalle flexibel und autonom bewegbar ist.

Die Schnittstellen 5 an den Seitenflächen der Basis 2 des Industrieroboters 1 ermöglichen, dass verschiedene Zusatzvorrichtungen, nachfolgend als "Arbeitsplätze" 10.1, 10.2, 10.3 bezeichnet, mit der Basis 2 und damit mit dem Industrieroboter 1 andocken können, um so eine Ausrichtung/Referenzierung zum Industrieroboter 1 und ggf. außerdem angeschlossenen Zusatzvorrichtungen zu ermöglichen.

Ferner kann neben der Ausrichtung und Referenzierung eine zweiseitige Datenübertragung zwischen den jeweiligen Zusatzvorrichtungen 10.1, 10.2, 10.3 und dem Industrieroboter stattfinden.

Der Industrieroboter 1 mit den verbundenen Arbeitsplätzen 10.1, 10.2, 10.3 ist in der gezeigten beispielhaften Ausführungsform mittels eines festen Ausrichtungs- und Referenzierunganschluss 11 mit einer Bearbeitungsmaschine 20 gekoppelt. Somit kann mittels des Ausrichtungs- und Referenzierungsanschluss ebenso wie an der oben beschriebenen Schnittstelle, eine Ausrichtung/Referenzierung und eine Datenübertragung zwischen der Bearbeitungsmaschine 20 und der mobilen Führungsmaschine (Industrieroboter) 1 stattfinden.

Zudem ist es somit möglich, dass Informationen zu den angeschlossenen Zusatzvorrichtungen (Arbeitsplätzen) 10.1, 10.2, 10.3 an eine Bearbeitungsmaschine 20 übertragen werden.

In der in Figur 1 gezeigten beispielhaften Ausführungsform ist die gezeigte Bearbeitungsmaschine 20 eine CNC Bearbeitungsmaschine. Somit kann ebenso ermöglicht werden, dass die verschiedenen Arbeitsplätze 10.1, 10.2, 10.3 zur CNC Bearbeitungsmaschine ausgerichtet und referenziert werden können und zudem eine Datenübertragung innerhalb dieser so erzeugten Zelle ermöglicht wird.

Der Endeffektor 4 des Industrieroboters 1 kann beispielsweise ein Greiferaggregat sein und von den nachfolgend genauer beschriebenen Arbeitsplätzen ein Werkstück entnehmen, zu der Bearbeitungsmaschine 20 fördern, wo eine Bearbeitung des Werkstücks durchgeführt wird, und anschließend kann mittels des Greiferaggregats am Endeffektor 4 des Industrieroboters 1 das bearbeitete Werkstück wieder von der Bearbeitungsmaschine entnommen werden, um so zu einem weiteren Arbeitsplatz (Zusatzvorrichtung) gefördert zu werden.

Hierbei ist es ebenso denkbar, dass die Endeffektoren selbst eine Bearbeitung, beispielsweise eine spanende Bearbeitung durchführen können, sodass keine Verbindung zu einer Bearbeitungsmaschine 20, beispielsweise einer CNC Bearbeitungsmaschine 20, notwendig ist und die Zelle aus einem Industrieroboter 1 und verschiedenen Zusatzvorrichtungen 10.1, 10.2, 10.3 selbstständig betrieben werden kann oder ein hauptzeitgleicher Vorgang durchgeführt werden kann. Somit ist außerdem eine flexible Ausgestaltung der Zelle möglich.

Um die Flexibilität der gezeigten Zelle weiter zu steigern, sind die Zusatzvorrichtungen 10.1, 10.2 und 10.3 mit jeweils einer Rollvorrichtung 7 versehen, sodass diese schnell und einfach eine Anlieferung bzw. Abtransportierung der Zusatzvorrichtungen (Arbeitsplätze) ermöglicht.

Gemäß einer weiteren, nicht gezeigten, Ausführungsform ist ebenso denkbar, dass die Zusatzvorrichtungen mit einem fahrerlosen Transportsystem koppelbar sind oder selbst autonomisiert und motorisiert sind, sodass diese sich selbstständig von der Schnittstelle 5 des Industrieroboters 1 lösen können und sich von der Zelle zum Handhaben oder Bearbeiten eines Werkstücks entfernen können.

Dies ermöglicht außerdem eine eindeutige Referenzierung der Zusatzvorrichtungen und beispielsweise an die an dem distalen Ende des Betätigungsarms des Industrieroboters 1 anbringbaren Endeffektoren 4 zu der Führungsmaschine (dem Industrieroboter) 1 und/oder zu der CNC Bearbeitungsmaschine 20.

Nachfolgend soll nun ein Prozessablauf in einer solchen Zelle unter Beschreibung der jeweiligen Zusatzvorrichtungen (Arbeitsplätze) 10.1, 10.2 und 10.3 detaillierter beschrieben werden.

Hierzu befinden sich Rohteile, beispielsweise Möbelteile, auf einem Arbeitsplatz, einem sogenannten Rohteilstapel 10.1. Dieser Rohteilstapel 10.1 ist mittels einer ersten Schnittstelle an der Basis 2 des Industrieroboters 1 gekoppelt und somit positionsgenau zum Industrieroboter und einer ggf. angeschlossenen CNC Bearbeitungsmaschine 20 referenziert.

Der Industrieroboter, welcher die Roh- und Fertigteile mittels eines Endeffektors 4 in Form einer Greifeinheit greift und bewegt, ist mit einem Greiferaggregat als Endeffektor 4 ausgerüstet. Dieses Greiferaggregat ist über eine weitere Schnittstelle am distalen Ende des Befestigungsarms 3 der mobilen Führungseinheit des Industrieroboters 1 mit dem Industrieroboter 1 verbunden.

Die Rohteile werden von Industrieroboter 1 aus definierter Position vom Arbeitsplatz "Rohteilstapel" 10.1 gegriffen und in definierter Position in die CNC Bearbeitungsmaschine 20 bzw. auf einem Maschinenaufspanntisch referenziert abgelegt und gespannt.

Die Fertigteile werden nach der Bearbeitung in der CNC Bearbeitungsmaschine 20 von der Führungsmaschine 1 aus der CNC Bearbeitungsmaschine 20 entnommen und auf einem weiteren Arbeitsplatz, also einer weiteren Zusatzvorrichtung, "Fertigteilestapel" 10.2 in einer definierten Lage abgelegt. In der in Figur 1 gezeigten beispielhaften Ausführungsform ist der Arbeitsplatz "Fertigstapel" 10.2 ein Hordenwagen, welcher mittels einer zweiten Schnittstelle mit der Basis 2 des Industrieroboters 1 verbunden und referenziert ist. Hierbei kann beispielsweise zudem die Position und Lage der Fertigteile und des Fertigteilestapels in Bezug auf den Arbeitsplatz "Fertigteilestapel" 10.2 mithilfe von Positionierhilfen definiert werden.

Zusätzlich kann an dem Industrieroboter 1 über eine dritte Schnittstelle 5 ein mobiler Aufspanntisch 10.3 an der Basis 2 des Industrieroboters 1 angedockt und referenziert werden. Ist somit beispielsweise der Industrieroboter mit einem Bearbeitungsaggregat als Endeffektor 4 bestückt, können Werkstücke auf diesem Aufspanntisch 10.3 von dem Industrieroboter 1 selbst mechanisch bearbeitet werden.

Eine beispielhafte Anwendung ist hier beispielsweise eine Vor- oder Nachbearbeitung für eine Bearbeitung in der CNC Bearbeitungsmaschine 20. Hierbei ist ebenso denkbar, dass auf dem mobilen Aufspanntisch 10.3 weitere Werkzeuge als Endeffektoren des Industrieroboters abgelegt sind, sodass ein Werkzeugwechsel am distalen Ende des Bewegungsarms des Industrieroboters 1 erfolgen kann.

Zudem kann das System durch entsprechende Schutzmaßnahmen, zum Beispiel optische Schutzvorrichtungen in Form von Sensoren, abgesichert sein. Dies ist in der in Figur 1 gezeigten beispielhaften Ausführungsform durch den optischen Erkennungsbereich 12 gekennzeichnet.

Somit kann einfach, modular und schnell rekonfigurierbar eine Zelle zum Handhaben und/oder Bearbeiten, also beispielsweise zum Bearbeiten oder Sortieren von Werkstücken, beispielsweise in Verbindung mit einer CNC Bearbeitungsmaschine 20 mit einem Industrieroboter 1 und mehreren Zusatzvorrichtungen 10.1, 10.2, 10.3 erreicht werden. Bevorzugt können hierbei zusätzlich Sicherheitsvorrichtungen zur Absicherung vorgesehen sein.

Nach Abschluss der Handhabung und/oder Bearbeitung von Möbelteilen (Werkstücken) können die Zusatzvorrichtungen mittels der Schnittstelle 5 von der Basis 2 des Industrieroboters 1 abgekoppelt und wahlweise manuell durch einen Bediener per Hubwagen oder Gabelstapler oder durch ein fahrerloses Transportsystem oder in einer weiteren, nicht gezeigten, Ausführungsform mittels eines autonom fahrbaren fahrerlosen Transportsystem selbstständig aus der Zelle entfernt werden.

Die Steuerung des Industrieroboters erfolgt hierbei bevorzugt über eine cloudbasierte Anbindung an ein sogenanntes Fertigungsleitsystem, welches sowohl die Interaktion des Industrieroboters 1 mit der CNC-Bearbeitungsmaschine 20 koordiniert bzw. steuert, als auch den optimierten Einsatz des Industrieroboters 1 im Fertigungsumfeld mit mehreren Zusatzvorrichtungen 10.1, 10.2, 10.3, mehreren CNC Bearbeitungsmaschinen 20, oder sogar mit mehreren Industrierobotern 1 ermöglicht.

Abschließend soll noch für die in Figur 1 gezeigte beispielhafte Ausführungsform einer Zelle zum Handhaben und/oder Bearbeiten von Möbelteilen zwei Anwendungsfälle beschrieben werden.

Der erste Anwendungsfall bezieht sich darauf, dass der Industrieroboter 1 für das automatische Be- und Entladen der CNC-Bearbeitungsmaschine 20 eingerichtet ist.

Die Zusatzvorrichtung des "Rohteilstapels" 10.1, welche mit Rohteilen bestückt ist, wird beispielhaft von einem Bediener mittels einem Flurförderfahrzeug oder von einem fahrerlosen Transportsystem mittels der Rollvorrichtung 7 zum Bearbeitungsbereich der Zelle transportiert und mittels einer ersten Schnittstelle 5 an der Basis des Industrieroboters 1 verbunden, zentriert und referenziert.

Ebenfalls wird der leere "Fertigteilestapel" als weitere Zusatzvorrichtung 10.2 vom Bediener mittels Flurförderfahrzeug oder von einem fahrerlosen Transportsystem zum Bearbeitungsbereich transportiert und ebenfalls mittels der zweiten Schnittstelle an der Basis 2 des Industrieroboters 1 gekoppelt, referenziert und ausgerichtet.

Nach Inbetriebnahme und Start der Zelle greift die Führungsmaschine 1 ein Rohteil vom Rohteilstapel 10.1 und legt es in definierter Position in der CNC Bearbeitungsmaschine 20 ab. Der Bearbeitungsvorgang startet. Nach Abschluss der Bearbeitung durch die CNC Bearbeitungsmaschine 20 greift der Industrieroboter 1 das fertige Teil auf und legt es in definierter Position auf dem "Fertigteilestapel", zum Beispiel in Form eines Hordenwagens 10.2 ab.

Hierbei kann die Be- und Entladefunktion auch zum automatischen Befüllen oder Setzen von Verbrauchsmaterialien bzw. Werkzeugen in der CNC Bearbeitungsmaschine 20 verwendet werden. Nach Fertigstellung des Fertigungsauftrags stoppt die Zelle und der befüllte Fertigteilestapel 10.2 sowie der leere Rohteilstapel 10.1 kann manuell oder durch ein fahrerloses Transportsystem entnommen werden.

Bei Einsatz eines fahrerlosen Transportsystems kann das System kontinuierlich betrieben werden und parallel hierzu die Materialkommissionierung erfolgen.

Gemäß einem zweiten Anwendungsfall ist der Industrieroboter 1 zusätzlich für eine Bearbeitungsoperation ausgerichtet.

Als Endeffektor 4 wird für diesen Fall ein Bearbeitungsaggregat an dem distalen Ende des Betätigungsarms 3 des Industrieroboters 1, bevorzugt selbstständig, eingewechselt.

Hierbei wird außerdem an einer Schnittstelle 5 an der Basis 2 des Industrieroboters ein mobiler Aufspanntisch 10.3 verbunden und referenziert.

Auf den Aufspanntisch können jetzt Werkzeugstücke gespannt werden und von der mobilen Führungsmaschine 1 bearbeitet werden. Bevorzugt kann das Werkstück anschließend ebenfalls von der CNC Bearbeitungsmaschine 20 nachbearbeitet werden.

Auch eine Nachbearbeitung durch den Industrieroboter 1 nach der Bearbeitung der CNC Bearbeitungsmaschine 20 des Werkstücks ist ebenfalls möglich. Hierbei kann das Werkstück vom Bediener händisch auf den mobilen Aufspanntisch 10.3 gelegt werden.

Alternativ kann der Industrieroboter das Werkstück selbstständig vom Rohteilstapel 10.1 oder aus der CNC Bearbeitungsmaschine 20 nehmen, auf dem mobilen Aufspanntisch 10.3 ablegen und nach Einwechseln des Bearbeitungsaggregats bearbeiten.

Zudem ist in einer weiteren nicht gezeigten Ausführungsform eine Bearbeitung auf dem Bearbeitungstisch der CNC Bearbeitungsmaschine 20 durch den Industrieroboter 1 möglich.

Nach Beendigung der Bearbeitung kann hierbei die mobile Führungsmaschine 1 wieder das Greifaggregat als Endeffektor 4 einwechseln und das Teil auf dem Fertigteilestapel 10.2 ablegen.

Somit können CNC Bearbeitungsmaschinen modular und rekonfigurierbar aufgebaut oder automatisiert werden und auch hinsichtlich des Funktionsumfangs bzw. Bearbeitungsumfangs modular und rekonfigurierbar erweitert werden.

Außerdem ist es möglich, dass mittels der Schnittstelle am Industrieroboter eine eigene ortsflexible und mobile Handhabungs- und/oder Bearbeitungszelle erzeugt wird.

Somit können Maschinenteile automatisiert ohne Eingriff eines Bedieners gefertigt werden, was die Arbeitsgänge parallelisiert, Pausenzeiten überbrückt, Fertigung von Kleinserien ermöglicht und weitere Funktionen wie Beschlagsetzen oder Montagevorgänge können automatisiert durchgeführt werden.

### Bezugszeichenliste

- 1: mobile Führungsmaschine (Industrieroboter)
- 2: Basis
- 3: Betätigungsarm
- 4: Endeffektor
- 5: Schnittstelle
- 6: fahrerloses Transportsystem
- 7: Rollvorrichtung
- 8: weitere Schnittstelle
- 10.1, 10.2, 10.3: Zusatzvorrichtung (Arbeitsplätze), insbesondere mit:
10.1 Rohteilstapel
10.2 Fertigteilstapel
10.3 mobiler Aufspanntisch
- 11: Ausrichtungs- und Referenzierungsanschluss
- 12: optischer Erkennungsbereich
- 20: Bearbeitungsmaschine

## Patentansprüche

1. System, umfassend eine zentrale Steuereinrichtung und eine Zelle zum Handhaben und/oder Bearbeiten von Werkstücken, beispielsweise von Möbelteilen, die bevorzugt zumindest abschnittsweise aus Holz, Holzwerkstoffen, Kunststoff oder dergleichen bestehen, die Zelle aufweisend:
mindestens eine mobile Führungsmaschine (1), bevorzugt ein Industrieroboter, zum Handhaben und/oder Bearbeiten der Werkstücke, wobei die mobile Führungsmaschine aufweist:
mindestens einen Betätigungsarm (3), welcher sich in mindestens zwei Achsen, bevorzugt mindestens drei Achsen, besonders bevorzugt sechs Achsen, bewegbar von einer Basis (2) der mobilen Führungsmaschine (1) erstreckt, und
mindestens eine Schnittstelle (5), welche an der Basis (2) der mobilen Führungsmaschine (1) angeordnet ist,
wobei die mobile Führungsmaschine (1) so ausgestaltet ist, dass sie verankerungsfrei auf einem Untergrund auf-/bzw. abbaubar ist und, bevorzugt autonom, bewegbar ist, und wobei die Zelle ferner aufweist:
mindestens eine Zusatzvorrichtung (10.1, 10.2, 10.3), welche mittels der mindestens einen Schnittstelle (5) der mobilen Führungsmaschine (1) zum Konfigurieren der Ausgestaltung der Zelle gekoppelt ist,
**dadurch gekennzeichnet, dass**
die mindestens eine Schnittstelle (5) so ausgestaltet ist, dass sie eine Verbindung, und eine Referenzierung und/oder Ausrichtung, und einen Datenaustausch mit der Zusatzvorrichtung (10.1, 10.2, 10.3) ermöglicht,
die Schnittstelle (5) ausgestaltet ist, eine Referenzierung und/oder Ausrichtung der Zusatzvorrichtung (10.1, 10.2, 10.3) zur mobilen Führungsmaschine mechanisch und virtuell mittels GPS Positionsdaten, einer Radarpositionierung, oder mittels optischer Markierungen zu ermöglichen,
die Zelle ferner an der zentralen Steuervorrichtung angeordnet ist, welche ausgestaltet ist, Zustände der mobilen Führungsmaschine und der mindestens einen Zusatzvorrichtung (10.1, 10.2, 10.3) zu erfassen, und ferner ausgestaltet ist, Prozessabläufe mittels der in der Zelle erfassten Zustände zu optimieren.

2. System nach Anspruch 1, wobei die mobile Führungsmaschine (1) ferner einen Endeffektor (4) aufweist, welcher mittels einer weiteren Schnittstelle (8) am distalen Ende des Betätigungsarms (3) angeordnet ist, und welcher an verschiedene Funktionen anpassbar ist.

3. System nach Anspruch 2, wobei der Endeffektor (4) ausgestaltet ist, Funktionen der spanenden Bearbeitung, der Kantennachbearbeitung und/oder der Montage durch eine Verbindung mit verschiedenen Werkzeugen an der weiteren Schnittstelle (8) am Endeffektor (4) auszuführen.

4. System nach einem der bisherigen Ansprüche, wobei die mobile Führungsmaschine (1) ferner mindestens einen Sicherheitssensor, bevorzugt einen visuellen Sicherheitssensor, aufweist.

5. System nach einem der bisherigen Ansprüche, wobei die Zusatzvorrichtung (10.1, 10.2, 10.3) mindestens eine von einer Bearbeitungsmaschine (20), ein Arbeitsplatz, ein Stapelplatz für ein Werkstück, Werkzeug, ein Aggregat, ein Aggregatemagazin, oder mindestens eine Greifvorrichtung, ein Greifvorrichtungsmagazin, ein Aufspanntisch für ein Werkstück, und/oder ein Lagerplatz für Verbrauchsmaterialien, beispielsweise Kanten, Leim und/oder Beschläge, und/oder eine Sicherheitsvorrichtung ist.

6. System nach einem der vorhergehenden Ansprüche, wobei der Datenaustausch der mobilen Führungsmaschine mit der Zusatzvorrichtung (10.1, 10.2, 10.3) mittels der Schnittstelle (5) so ausgestaltet ist, dass die Zusatzvorrichtung (10.1, 10.2, 10.3) mittels einer Steuerung der mobilen Führungsmaschine erfasst und zentral von der mobilen Führungsmaschine gesteuert werden kann.

7. System nach einem der vorhergehenden Ansprüche, wobei die mobile Führungsmaschine (1) und die mindestens eine Zusatzvorrichtung (10.1, 10.2, 10.3) mittels der Kopplung an der Schnittstelle (5) der mobilen Führungsmaschine, bevorzugt autonom, gemeinsam zu verschiedenen Positionen, beispielsweise Bearbeitungs- oder Wartepositionen, bewegbar sind, oder
wobei die mobile Führungsmaschine (1) und die mindestens eine Zusatzvorrichtung (10.1, 10.2, 10.3) getrennt voneinander, bevorzugt autonom, zu verschiedenen Positionen, beispielsweise Bearbeitungs- oder Wartepositionen, bewegbar sind und ausgestaltet sind sich mittels der Schnittstelle (5) an der mobilen Führungsmaschine autonom wieder miteinander zu koppeln.

8. System nach einem der vorhergehenden Ansprüche, ferner eine stationäre Bearbeitungsmaschine (20), bevorzugt eine CNC-Bearbeitungsmaschine aufweisend, welche mittels eines festen Ausrichtungs- und Referenzierungsanschlusses (11) mit einer ersten Schnittstelle (5) der mobilen Führungsmaschine gekoppelt ist, an der wiederrum mindestens eine Zusatzvorrichtung (10.1, 10.2, 10.3) mittels einer zweiten Schnittstelle (8) der mobilen Führungsmaschine gekoppelt ist.

9. System nach einem der vorhergehenden Ansprüche, wobei die mobile Führungsmaschine (1) und/oder die mindestens eine Zusatzvorrichtung (10.1, 10.2, 10.3) mit einem Flurförderfahrzeug oder einem fahrerlosen Transportsystem (6) verbindbar sind.

10. Verfahren zum Handhaben und/oder Bearbeiten von Werkstücken, beispielsweise von Möbelteilen, die bevorzugt zumindest abschnittsweise aus Holz, Holzwerkstoffen, Kunststoff oder dergleichen bestehen, mit den folgenden Schritten:
Vorsehen eines Systems gemäß einem der bisherigen Ansprüche;
Anliefern, bevorzugt autonomes Anliefern, einer Zusatzvorrichtung (10.1, 10.2, 10.3) an eine mobile Führungsmaschine (1);
Ankoppeln der Zusatzvorrichtung (10.1, 10.2, 10.3) an die mobile Führungsmaschine (1) mittels einer Schnittstelle (5) der mobilen Führungsmaschine;
Erkennen der angekoppelten Zusatzvorrichtung (10.1, 10.2, 10.3) ;
Ausführen einer Handhabungs- und/oder Bearbeitungsfunktion durch die mobile Führungsmaschine (1);
Abkoppeln der Zusatzvorrichtung (10.1, 10.2, 10.3) von der Schnittstelle (5) der mobilen Führungsmaschine;
Abtransportieren, bevorzugt autonomes Abtransportieren, der Zusatzvorrichtung (10.1, 10.2, 10.3).

11. Verfahren nach Anspruch 10, ferner mit dem Schritt des Koppelns der mobilen Führungsmaschine mit der daran angekoppelten Zusatzvorrichtung (10.1, 10.2, 10.3) an eine stationäre Bearbeitungsvorrichtung, bevorzugt eine stationäre CNC-Bearbeitungsvorrichtung.

## Claims

1. System comprising a central control device and a cell for handling and/or machining workpieces, for example furniture parts, which preferably consist at least partly of wood, wood-based materials, plastics or the like, the cell having:
at least one mobile guide machine (1), preferably an industrial robot, for handling and/or machining the workpieces, wherein the mobile guide machine has:
at least one operating arm (3) which extends from a base (2) of the mobile guide machine (1) so as to be moveable in at least two axes, preferably at least three axes, particularly preferably six axes, and
at least one interface (5) which is arranged on the base (2) of the mobile guide machine (1),
wherein the mobile guide machine (1) is designed in such a way that it can be set up or dismantled on a supporting surface without anchoring and is moveable, preferentially autonomously, and wherein the cell also has:
at least one accessory device (10.1, 10.2, 10.3) which is coupled by means of the at least one interface (5) of the mobile guide machine (1) to configure the design of the cell,
**characterised in that**
the at least one interface (5) is designed in such a way that it makes possible a connection and a referencing and/or alignment and a data exchange with the accessory device (10.1, 10.2, 10.3),
the interface (5) is designed to make possible a referencing and/or alignment of the accessory device (10.1, 10.2, 10.3) relative to the mobile guide machine, mechanically and virtually, by means of GPS position data, radar positioning, or by means of optical markings,
the cell is also arranged on the central control device, which is designed to detect states of the mobile guide machine and the at least one accessory device (10.1, 10.2, 10.3) and is also designed to optimise process sequences by means of the states detected in the cell.

2. System according to claim 1, wherein the mobile guide machine (1) also has an end effector (4) which is arranged, by means of another interface (8), at the distal end of the operating arm (3), and which can be adapted to various functions.

3. System according to claim 2, wherein the end effector (4) is designed to perform functions of machining, edge finishing and/or assembly by means of a connection with various tools at the other interface (8) on the end effector (4).

4. System according to one of the preceding claims, wherein the mobile guide machine (1) also has at least one safety sensor, preferably a visual safety sensor.

5. System according to one of the preceding claims, wherein the accessory device (10.1, 10.2, 10.3) is at least one of a machine tool (20), a workstation, a stacking location for a workpiece, a tool, a unit, a unit magazine, or at least one gripping device, a gripping device magazine, a clamping table for a workpiece, and/or a storage location for consumables, for example edges, glue and/or fittings, and/or a safety device.

6. System according to one of the preceding claims, wherein the data exchange between the mobile guide machine and the accessory device (10.1, 10.2, 10.3) by means of the interface (5) is designed in such a way that the accessory device (10.1, 10.2, 10.3) can be detected by means of a control system of the mobile guide machine and can be controlled centrally by the mobile guide machine.

7. System according to one of the preceding claims, wherein the mobile guide machine (1) and the at least one accessory device (10.1, 10.2, 10.3) can be moved together, preferably autonomously, to different positions, for example machining or maintenance positions, by means of the coupling to the interface (5) of the mobile guide machine, or
wherein the mobile guide machine (1) and the at least one accessory device (10.1, 10.2, 10.3) can be moved separately from each other, preferably autonomously, to different positions, for example machining or maintenance positions, and are designed to be autonomously coupled together again by means of the interface (5) on the mobile guide machine.

8. System according to one of the preceding claims, further having a stationary machine tool (20), preferably a CNC machine tool which is coupled by means of a fixed alignment and referencing connection (11) to a first interface (5) of the mobile guide machine, to which at least one accessory device (10.1, 10.2, 10.3) is in turn coupled by means of a second interface (8) of the mobile guide machine.

9. System according to one of the preceding claims, wherein the mobile guide machine (1) and/or the at least one accessory device (10.1, 10.2, 10.3) can be connected to an industrial truck or a driverless transport system (6).

10. Method for handling and/or machining workpieces, for example furniture parts, which preferably consist at least partly of wood, wood-based materials, plastics or the like, with the following steps:
providing a system according to one of the previous claims;
delivering, preferably autonomously, an accessory device (10.1, 10.2, 10.3) to a mobile guide machine (1);
coupling the accessory device (10.1, 10.2, 10.3) to the mobile guide machine (1) by means of an interface (5) of the mobile guide machine;
detecting the coupled accessory device (10.1, 10.2, 10.3) ;
performing of a handling and/or machining function by the mobile guide machine (1);
uncoupling the accessory device (10.1, 10.2, 10.3) from the interface (5) of the mobile guide machine;
transporting away the accessory device (10.1, 10.2, 10.3), preferably autonomously.

11. Method according to claim 10, with the further step of coupling the mobile guide machine together with the accessory device (10.1, 10.2, 10.3) coupled to it to a stationary machining device, preferably a stationary CNC machining device.

## Revendications

1. Système comprenant un dispositif de commande central et une cellule de manipulation et/ou d'usinage de pièces à usiner,
par exemple de parties de meuble qui se composent de préférence au moins par sections de bois, matériaux dérivés du bois, matière plastique ou similaire, la cellule présentant :
au moins une machine de guidage (1) mobile, de préférence un robot industriel, pour la manipulation et/ou l'usinage de pièces à usiner, dans lequel la machine de guidage mobile présente :
au moins un bras d'actionnement (3) qui s'étend dans au moins deux axes, de préférence au moins trois axes, le plus préférentiellement six axes, de manière mobile d'une base (2) de la machine de guidage (1) mobile, et
au moins une interface (5) qui est agencée au niveau de la base (2) de la machine de guidage (1) mobile,
dans lequel la machine de guidage (1) mobile est configurée de sorte qu'elle puisse être montée ou démontée sans ancrage sur un sol et, est mobile de préférence de manière autonome, et dans lequel la cellule présente de plus :
au moins un dispositif supplémentaire (10.1, 10.2, 10.3) qui est couplé au moyen d'au moins une interface (5) de la machine de guidage (1) mobile pour la configuration de la configuration de la cellule,
**caractérisé en ce que**
l'au moins une interface (5) est configurée de sorte qu'elle permette une liaison, et un référencement et/ou une orientation, et un échange de données avec le dispositif supplémentaire (10.1, 10.2, 10.3),
l'interface (5) est configurée afin permettre un référencement et/ou une orientation du dispositif supplémentaire (10.1, 10.2, 10.3) pour la machine de guidage mobile mécaniquement et virtuellement au moyen de données de position GPS, d'un positionnement radar, ou au moyen de marquages optiques,
la cellule est de plus agencée au niveau du dispositif de commande, lequel est configuré afin de détecter des états de la machine de guidage mobile et l'au moins un dispositif supplémentaire (10.1, 10.2, 10.3), et est de plus configuré
afin d'optimiser des processus au moyen des états détectés dans la cellule.

2. Système selon la revendication 1, dans lequel la machine de guidage (1) mobile présente de plus un effecteur final (4) qui est agencé au moyen d'une autre interface (8) à l'extrémité distale du bras d'actionnement (3), et qui peut être adapté aux différentes fonctions.

3. Système selon la revendication 2, dans lequel l'effecteur final (4) est configuré afin de réaliser des fonctions de l'usinage par enlèvement de copeaux, du post-usinage de bords et/ou du montage par une liaison avec différents outils au niveau de l'autre interface (8) sur l'effecteur final (4).

4. Système selon l'une quelconque des revendications précédentes, dans lequel la machine de guidage (1) mobile présente de plus au moins un capteur de sécurité, de préférence un capteur de sécurité visuel.

5. Système selon l'une quelconque des revendications précédentes, dans lequel le dispositif supplémentaire (10.1, 10.2, 10.3) est au moins une d'une machine-outil (20), un poste de travail, un poste d'empilement pour une pièce à usiner, un outil, un groupe, un magasin de groupe, ou au moins un dispositif de préhension, un magasin de dispositif de préhension, une table de serrage pour une pièce à usiner, et/ou un emplacement de stockage pour des consommables, par exemple des arêtes, de la colle et/ou des ferrures, et/ou un dispositif de sécurité.

6. Système selon l'une quelconque des revendications précédentes, dans lequel l'échange de données de la machine de guidage mobile avec le dispositif supplémentaire (10.1, 10.2, 10.3) est configuré au moyen de l'interface (5) de sorte que le dispositif supplémentaire (10.1, 10.2, 10.3) puisse être détecté au moyen d'une commande de la machine de guidage mobile et commandé de manière centrale par la machine de guidage mobile.

7. Système selon l'une quelconque des revendications précédentes, dans lequel la machine de guidage (1) mobile et l'au moins un dispositif supplémentaire (10.1, 10.2, 10.3) sont mobiles au moyen du couplage avec l'interface (5) de la machine de guidage mobile, de préférence de manière autonome, ensemble dans différentes positions, par exemple des positions d'usinage ou de maintenance, ou
dans lequel la machine de guidage (1) mobile et l'au moins un dispositif supplémentaire (10.1, 10.2, 10.3) sont mobiles séparément l'un de l'autre, de préférence de manière autonome, dans différentes positions, par exemple des positions d'usinage ou de maintenance, et sont configurés afin de se coupler de manière autonome de nouveau entre eux au moyen de l'interface (5) sur la machine de guidage mobile.

8. Système selon l'une quelconque des revendications précédentes, présentant de plus une machine-outil (20) stationnaire, de préférence une machine outil CNC qui est couplée au moyen d'un raccord d'orientation et de référencement fixe (11) avec une première interface (5) de la machine de guidage mobile, à laquelle de nouveau au moins un dispositif supplémentaire (10.1, 10.2, 10.3) est couplé au moyen d'une seconde interface (8) de la machine de guidage mobile.

9. Système selon l'une quelconque des revendications précédentes, dans lequel la machine de guidage (1) mobile et/ou l'au moins un dispositif supplémentaire (10.1, 10.2, 10.3) peuvent être reliés à un chariot de manutention ou à un système de transport (6) sans conducteur.

10. Procéde de manipulation et/ou d'usinage de pièces à usiner, par exemple de parties de meuble qui se composent de préférence au moins par sections de bois, de matériaux dérivés du bois, de matière plastique ou similaire, avec les étapes suivantes :
la prévoyance d'un système selon l'une quelconque de revendications précédentes ;
la livraison, de préférence la livraison autonome, d'un dispositif supplémentaire (10.1, 10.2, 10.3) à une machine de guidage (1) mobile ;
le couplage du dispositif supplémentaire (10.1, 10.2, 10.3) avec la machine de guidage (1) mobile au moyen d'une interface (5) de la machine de guidage mobile ;
la reconnaissance du dispositif supplémentaire (10.1, 10.2, 10.3) couplé ;
la réalisation d'une fonction de manipulation et/ou d'usinage par la machine de guidage (1) mobile ;
le découplage du dispositif supplémentaire (10.1, 10.2, 10.3) de l'interface (5) de la machine de guidage mobile ;
le transport, de préférence le transport autonome, du dispositif supplémentaire (10.1, 10.2, 10.3).

11. Procédé selon la revendication 10, de plus avec l'étape du couplage de la machine de guidage mobile avec le dispositif supplémentaire (10.1, 10.2, 10.3) couplé à celle-ci à un dispositif d'usinage stationnaire, de préférence un dispositif d'usinage CNC stationnaire.
